# EUROPÄISCHE PATENTSCHRIFT

(11) **EP 3 144 053 B1**
(45) Veröffentlichungstag und Bekanntmachung des Hinweises auf die Patenterteilung: **04.11.2020**
(21) Anmeldenummer: 16405017.1
(22) Anmeldetag: 12.09.2016
(51) Int. Cl.: C02F 1/42, C02F 1/44, B01D 63/10, B01D 61/08, B01J 47/022

(54) **BEHÄLTER FÜR EINE FILTERKARTUSCHE SOWIE FILTERSATZ**
CONTAINER FOR A FILTER CARTRIDGE AND FILTER SET
RÉCIPIENT POUR UNE CARTOUCHE FILTRANTE ET ENSEMBLE DE FILTRE

(30) Priorität: 15.09.2015 CH 13392015
(43) Veröffentlichungstag der Anmeldung: 22.03.2017
(73) Patentinhaber: ELYSATOR Genossenschaft, 8865 Bilten (CH)
(72) Erfinder: RICKENBACH, Manuel, 8038 Zürich (CH)
(74) Vertreter: Wagner, Wolfgang Heribert

(56) Entgegenhaltungen:
- DE-A1- 2 626 572
- US-A- 4 218 317
- US-A- 5 366 400
- US-A1- 2014 124 428
- US-A1- 2015 041 380

## Beschreibung

### Technisches Gebiet

Die Erfindung betrifft einen Behälter für eine Filterkartusche sowie einen Filtersatz, der einen solchen Behälter sowie mindestens zwei unterschiedliche Filterkartuschen umfasst. Filterkartuschen der hier verwendeten Art werden vor allem für die Filterung, insbesondere die Entsalzung, von Wasser eingesetzt.

### Stand der Technik

Sowohl Ionentauscher-Kartuschen als auch Umkehrosmose-Kartuschen sind seit langer Zeit bekannt. Beide haben spezifische Vor- und Nachteile. Ionentauscher-Kartuschen bieten hohe Filterleistung, ausserdem fällt kein Konzentrat an. Doch muss das Ionentauscherharz von Zeit zu Zeit ersetzt werden, was ziemlich hohe Kosten verursacht. Bei Umkehrosmose-Kartuschen sind die Kosten pro Liter Reinwasser geringer, doch ist die Produktionsleistung tiefer und es fällt ein Konzentrat, meist Abwasser, an, das entsorgt werden muss.

Es sind auch Behälter für Ionentauscher-Kartuschen bekannt, welche einen geschlossenen Boden aufweisen und für Umkehrosmose-Kartuschen geeignete Behälter, bei denen im Boden eine geeignete Ableitung für das Konzentrat vorgesehen ist.

Aus US 5 366 400 A ist ein gattungsgemässer zylindrischer Behälter zur Aufnahme einer zylindrischen Filterkartusche für die Filterung von Motoröl bekannt. Er weist einen runden ebenen Boden auf mit einer mittigen Öffnung, in die ein Ableitungsrohr eingeschraubt ist, welches eine oberhalb des Bodens liegende Abzugsöffnung bildet und der Ableitung von Restöl nach einer Filterung dient. Es ist mit einem Absperrhahn versehen, der während einer Filterung geschlossen bleibt und lediglich geöffnet wird, wenn vor dem Auswechseln der Filterkartusche Restöl abgezogen wird. Die Filterkartusche besteht offenbar aus porösem Material und wird im wesentlichen radial durchströmt. Die Verwendung von Filterkartuschen unterschiedlicher Art ist nicht vorgesehen. Der Behälter wäre auch weder zur Aufnahme einer senkrecht durchströmten Ionentauscher-Filterkartusche noch zur Aufnahme einer Umkehrosmose-Filterkartusche geeignet.

US 2015/041 380 A1 offenbart eine Vielzahl von Filtereinheiten, die jeweils einen geschlossenen Behälter und ein darin fest eingebautes oder auch auswechselbares Filterelement umfassen. Auswechselbare Filterelemente verschiedener Art sind jedoch nicht erwähnt. In der Schrift geht es um die möglichst vollständige Leerung der Filtereinheiten nach einer Filterung zur Rückgewinnung von Resten gefilterter und ungefilterter Flüssigkeit, die im Gehäuse zurückgeblieben sind. Dazu sind weitere Anschlüsse vorgesehen, durch welche solche Reste abgezogen werden können oder zum Austreiben derselben Druckgas eingeleitet werden kann.

US 2014/124 428 A1 zeigt ein geschlossenes zylindrisches Gehäuse, das drei aufeinanderfolgende Filter, nämlich einen Kohlefilter, einen Umkehrosmose-Filter und einen Ionentauscher-Filter enthält, welche nacheinander durchströmt werden. Ein Austausch von Filtern verschiedener Art ist nicht vorgesehen.

US 4 218 317 A ist eine Filtereinheit entnehmbar mit einer Umkehrosmose-Filterkartusche in einem von einer oberen Gehäusehälfte und einer damit verschraubten unteren Gehäusehälfte gebildeten Gehäuse. Als Ableitung für das anfallende Konzentrat dient eine Kapillare, die für einen hohen Strömungswiderstand und entsprechenden Druckaufbau sorgt. Sie führt durch eine Sperrkugel eines Sperrventils, das normalerweise geschlossen ist, aber bei Bedarf, z.B. wenn die Filterkartusche gespült werden soll, zur Verringerung des Strömungswiderstands durch Verschieben der Sperrkugel aus einer Sperrventilaufnahme geöffnet werden kann. Da die Ableitung nicht verschliessbar ist, ist der Behälter für die Aufnahme einer Ionentauscher-Filterkartusche nicht geeignet.

### Darstellung der Erfindung

Aufgabe der Erfindung ist es, einen Behälter für Filterkartuschen anzugeben, in den sowohl Ionentauscher-Filterkartuschen als auch Umkehrosmose-Filterkartuschen eingesetzt werden können. Diese Aufgabe wird durch die Erfindung, wie sie in den Ansprüchen gekennzeichnet ist, gelöst. In den Ansprüchen wird ausserdem ein Filtersatz angegeben, welcher einen erfindungsgemässen Behälter sowie jeweils mindestens eine Ionentauscher-Filterkartusche und mindestens eine Umkehrosmose-Filterkartusche umfasst.

Die Erfindung erlaubt es, je nach Einsatzbedingungen und Präferenzen eine Ionentauscher-Filterkartusche oder eine Umkehrosmose-Filterkartusche einzusetzen. Auf diese Weise können je nach den gerade im Vordergrund stehenden Bedürfnissen die Vorteile der einen oder der anderen Art von Filterkartusche genutzt werden.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen Längsschnitt durch einen erfindungsgemässen Behälter mit einer in denselben eingesetzten Ionentauscher-Filterkartusche und
- Fig. 2: einen Längsschnitt durch einen erfindungsgemässen Behälter mit einer in denselben eingesetzten Umkehrosmose-Filterkartusche.

### Wege zur Ausführung der Erfindung

Der vorzugsweise aus Kunststoff bestehende Behälter 1 ist annähernd zylindrisch, mit einem Boden 2 und einer am Rand an den Boden 2 anschliessenden umlaufenden Seitenwand 3, welche eine Aufnahme 4 bilden, die an der dem Boden 2 gegenüberliegenden Seite eine runde Öffnung aufweist. Die der Öffnung zugewandte Oberseite des Bodens 2 weist einen an die Seitenwand 3 anschliessenden umlaufenden Randbereich 5 auf mit einer umlaufenden Rille, in welcher ein Dichtungsring 6 angeordnet ist. Der Randbereich 5 umgibt eine mittige Vertiefung 7 an der Oberseite des Bodens 2. Eine durch den Boden 2 geführte Ableitung 8 verbindet eine Abzugsöffnung 9 in der Vertiefung 7 mit einer Ablauföffnung 10 seitlich am unteren Ende des Behälters 1.

An der Abzugsöffnung 9 ist eine als koaxiale zylindrische Erweiterung 11 eines kurzen Abschnitts der Ableitung 8 ausgebildete Fassung für ein Drosselventil vorgesehen, das über die Aufnahme 4 in die Fassung einsetzbar und aus ihr entfernbar oder auch fest mit dem Boden 2 verbunden sein kann. Zwischen der Abzugsöffnung 9 und der Ablauföffnung 10 liegt in der Ableitung 8 ausserdem ein Absperrhahn, der als Kugelhahn 12 ausgebildet ist.

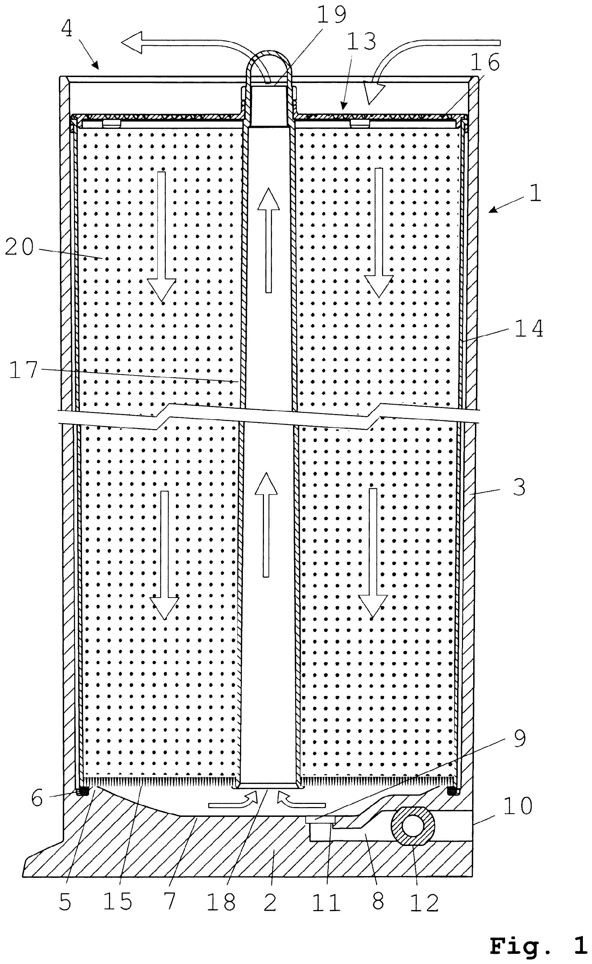

Eine in die Aufnahme 4 eingesetzte im wesentlichen zylindrische Filterkartusche 13 ist gemäss Fig. 1 als Ionentauscher-Filterkartusche ausgebildet. Sie weist ein Kunststoffgehäuse mit einer umlaufenden Kartuschenwand 14 auf, welche von der Seitenwand 3 des Behälters 1 mit geringem Abstand umgeben ist sowie einen Kartuschenboden 15 und einen Kartuschendeckel 16. In der Mitte ist ausserdem eine mit Abstand von der Kartuschenwand 14 umgebene Rückleitung 17 angeordnet, die von einer Einlassöffnung 18 oberhalb der Vertiefung 7 zu einer Abströmöffnung 19 in der Mitte der Öffnung der Aufnahme 4 führt, wo eine Ableitung angeschlossen werden kann und als seitlich geschlossenes, d.h. für Flüssigkeit nicht durchlässiges Rohr ausgebildet ist. Die Kartuschenwand 14, die Rückleitung 17 , der Kartuschenboden 15 und der Kartuschendeckel 16 umschliessen einen Filterraum, der mit einem Filtermaterial 20 gefüllt ist, einem Filtergranulat aus Ionentauscherharz. Der Kartuschenboden 15 ist als Rückhaltesieb ausgebildet, mit einer Vielzahl von Öffnungen, deren Durchmesser kleiner ist als das Korn des Filtergranulats. Der Rand seiner Unterseite sowie der untere Rand der Kartuschenwand 14 liegen am Dichtungsring 6 an. Der Kartuschendeckel 16 ist ebenfalls mit einer Vielzahl von Öffnungen versehen. Der Kugelhahn 12 ist geschlossen.

Im Gebrauch wird durch die Öffnung der Aufnahme 4 zu filternde Flüssigkeit, meist salzhaltiges Wasser, unter einem Druck von z.B. zwischen 3bar und 15bar eingeleitet und fliesst senkrecht durch die Öffnungen im Kartuschendeckel 16, das Filtermaterial 20 und die Öffnungen im Kartuschenboden 15 nach unten in den zwischen dem Boden 2 des Behälters 1 und dem Kartuschenboden 15 liegenden Zwischenraum, wobei sie durch die Wechselwirkung mit dem Filtermaterial 20 gereinigt wird, indem die gelösten Stoffe durch Wasser ersetzt werden. Die gereinigte Flüssigkeit steigt dann von der Einlassöffnung 18 durch die Rückleitung 17 zur Abströmöffnung 19 auf, wo sie über eine angeschlossene Leitung (nicht dargestellt) abgezogen werden kann. Wenn in die Erweiterung 11 ein Drosselventil eingesetzt ist, so hat dies keine Auswirkung auf die Funktion, da durch die Ableitung 8 keine Flüssigkeit strömt. Die Filterleistung hängt vom Druck ab und kann etwa 10l/min bei 3bar und 20l/min bei 6bar betragen.

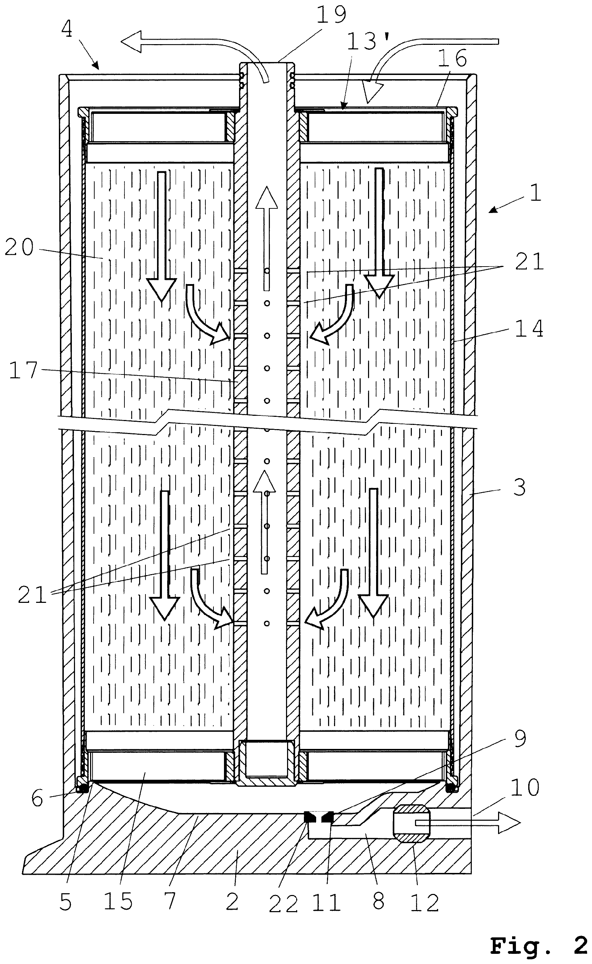

Gemäss Fig. 2 ist die in die Aufnahme 4 des selben Behälters 1 eingesetzte Filterkartusche 13' als Umkehrosmose-Filterkartusche ausgebildet. Der grundsätzliche Aufbau ist ähnlich wie der der Ionentauscher-Filterkartusche, sodass im Folgenden nur die abweichenden Bestandteile beschrieben werden.

Das Filtermaterial 20 ist als Wicklung aus einer selektiv semipermeablen Membran ausgebildet, welche Wasser durchlässt, aber im Wasser gelöste Stoffe zurückhält. Da das Filtermaterial 20 fest ist, sind der Kartuschenboden 15 und der Kartuschendeckel 16 mit grösseren Öffnungen versehen. Ein umlaufender Randstreifen des Kartuschenbodens 15 liegt am Dichtungsring 6 an. Die Rückleitung 17 ist wiederum als Rohr ausgebildet, das aber hier mit über seine Länge verteilten Löchern 21 versehen ist. In die Erweiterung 11 ist ein Drosselventil eingesetzt, das als Staudruckblende ausgebildet ist. Es handelt sich im Beispiel um eine Lochblende 22 mit einem auf einen konisch sich verengenden Abschnitt folgenden mittig durchgehenden Kanal, welcher einen Durchmesser von zwischen 1,5mm und 3mm, z.B. 2mm aufweist und eine Länge von zwischen 8mm und 15mm, z.B. 10mm. Der Kugelhahn 12 ist offen.

Im Gebrauch wird wiederum zu filternde Flüssigkeit durch die Öffnung in der Aufnahme 4 unter einem Druck von zwischen 3bar und 15bar eingeleitet, die durch die Öffnungen im Kartuschendeckel 16 in das Filtermaterial 20 fliesst. Dort wird ein Teil der Flüssigkeit durch die Windungen der Membran gedrückt und dabei gereinigt, worauf es durch die Löcher 21 in die Rückleitung 17 gelangt, in der es zur Abströmöffnung 19 hochsteigt. Der übrige Teil der Flüssigkeit, der dadurch mit den gelösten Stoffen angereichert wird, gelangt durch die Öffnungen im Kartuschenboden 15 in den Zwischenraum zwischen demselben und dem Boden 2 des Behälters 1, von wo es durch die Lochblende 22 und weiter über die Ableitung 8 zur Ablauföffnung 10 gelangt, wo es als Konzentrat anfällt.

Die Lochblende 22 dient dazu, den Druck im besagten Zwischenraum auf einer bestimmten Höhe zu halten und dadurch den Anteil an Konzentrat zu regeln und wird dazu geeignet dimensioniert. In der Regel wird dieser Druck auf etwa die Hälfte desjenigen Drucks eingestellt, mit dem die zu filternde Flüssigkeit in die Filterkartusche 13' eingeleitet wird. Je höher der Druck im Zwischenraum, desto günstiger das Verhältnis zwischen gefilterter Flüssigkeit und Konzentrat, aber desto geringer die Filterleistung, die ausserdem vom Druck der eingeleiteten Flüssigkeit abhängt. Bei einem Verhältnis von ca. 1:1 kann die Filterleistung etwa bei 5l/min bei 3bar und bei 10l/min bei 6bar liegen, was etwa der Hälfte der Filterleistung einer Ionentauscher-Filterkartusche entspricht.

### Bezugszeichenliste

- 1: Behälter
- 2: Boden
- 3: Seitenwand
- 4: Aufnahme
- 5: Randbereich
- 6: Dichtungsring
- 7: Vertiefung
- 8: Ableitung
- 9: Abzugsöffnung
- 10: Ablauföffnung
- 11: Erweiterung
- 12: Kugelhahn
- 13: Filterkartusche (Ionentauscher-Filterkartusche)
- 13': Filterkartusche (Umkehrosmose-Filterkartusche)
- 14: Kartuschenwand
- 15: Kartuschenboden
- 16: Kartuschendeckel
- 17: Rückleitung
- 18: Einlassöffnung
- 19: Abströmöffnung
- 20: Filtermaterial
- 21: Löcher
- 22: Lochblende

## Patentansprüche

1. Behälter (1) für eine Filterkartusche (13, 13'), welcher einen Boden (2) und eine mit demselben verbundene umlaufende Seitenwand (3) aufweist, die eine an einer dem Boden (2) gegenüberliegenden Oberseite offene Aufnahme (4) für die Filterkartusche (13, 13') bilden, mit einer durch den Boden (2) geführten, eine Abzugsöffnung (9) in der Aufnahme (4) mit einer Ablauföffnung (10) an einer Aussenseite des Behälters (1) verbindenden Ableitung (8), in welcher eine Fassung für die Aufnahme eines Drosselventils vorgesehen und ausserdem ein Absperrhahn angeordnet ist, **dadurch gekennzeichnet, dass** die der Aufnahme (4) zugewandte Oberseite des Bodens (2) einen an die Seitenwand (3) anschliessenden umlaufenden Randbereich (5) umfasst und eine mittige Vertiefung (7), in der die Abzugsöffnung (9) liegt.

2. Behälter nach Anspruch 1, **dadurch gekennzeichnet, dass** er einen Dichtungsring (6) aufweist, der in einer umlaufenden Rille im Randbereich (5) angeordnet ist.

3. Behälter nach Anspruch 1 oder 2, **dadurch gekennzeichnet, dass** die Fassung zwischen der Aufnahme (4) und dem Absperrhahn angeordnet ist.

4. Behälter nach Anspruch 3, **dadurch gekennzeichnet, dass** die Fassung im Bereich der Abzugsöffnung (9) angeordnet ist, derart, dass sie über die Aufnahme (4) zugänglich ist.

5. Behälter nach Anspruch 3, **dadurch gekennzeichnet, dass** die Fassung als Erweiterung (11) am Anfang der Ableitung (8) ausgebildet ist.

6. Behälter nach einem der Ansprüche 1 bis 5, **dadurch gekennzeichnet, dass** er ein in die Fassung eingesetztes Drosselventil umfasst.

7. Behälter nach Anspruch 6, **dadurch gekennzeichnet, dass** das Drosselventil als Staudruckblende ausgebildet ist.

8. Behälter nach Anspruch 7, **dadurch gekennzeichnet, dass** die Staudruckblende eine Lochblende (22) ist mit einem durchgehenden Kanal mit einem Durchmesser von zwischen 1,5mm und 3mm und einer Länge von zwischen 8mm und 15mm.

9. Behälter nach einem der Ansprüche 1 bis 8, **dadurch gekennzeichnet, dass** der Absperrhahn als Kugelhahn (12) ausgebildet ist.

10. Filtersatz, umfassend einen Behälter (1) nach einem der Ansprüche 1 bis 9 sowie mindestens eine erste in die Aufnahme (4) einsetzbare Filterkartusche (13), welche als Ionentauscher-Kartusche ausgebildet ist und mindestens eine zweite in die Aufnahme (4) einsetzbare Filterkartusche (13'), welche als Umkehrosmose-Kartusche ausgebildet ist.

11. Filtersatz nach Anspruch 10, **dadurch gekennzeichnet, dass** er ein in die Ableitung (8) des Behälters (1) eingesetztes oder einsetzbares Drosselventil umfasst.

12. Filtersatz nach Anspruch 10 oder 11, **dadurch gekennzeichnet, dass** die erste Filterkartusche (13) und die zweite Filterkartusche (13') jeweils ein an einer Unterseite und einer derselben gegenüberliegenden Oberseite jeweils für Flüssigkeit durchlässiges Gehäuse mit einer für Flüssigkeit undurchlässigen umlaufenden Kartuschenwand (14) aufweisen, das einen mit Filtermaterial (20) gefüllten Filterraum und eine mit Abstand von der Kartuschenwand (14) umgebene Rückleitung (17) umfasst, die von der Unterseite zu einer an der Oberseite angeordneten Abströmöffnung (19) führt.

13. Filtersatz nach einem der Ansprüche 10 bis 12, mit einem Behälter (1) nach Anspruch 3, **dadurch gekennzeichnet, dass** die erste Filterkartusche (13) und die zweite Filterkartusche (13') jeweils an der Unterseite einen mit Öffnungen versehenen Kartuschenboden (15) und an der Oberseite einen mit Öffnungen versehenen Kartuschendeckel (16) aufweisen.

## Claims

1. A container (1) for a filter cartridge (13, 13'), having a bottom (2) and a circumferential side wall (3) connected thereto, which form a reception (4) for the filter cartridge (13, 13') open on the upper side opposite the bottom (2), with a drain line (9) passing through the bottom (2) and connecting an outlet opening (9) in the reception (4) with a drain opening (10) on an outer side of the container (1), in which a socket for receiving a throttle valve is provided and additionally a stop valve is arranged, **characterised in that** the upper side of the bottom (2) facing the reception (4) comprises a circumferential edge area (5) adjoining the side wall (3), and a central depression (7) in which the outlet opening (9) is situated.

2. The container according to claim 1, **characterised in that** it has a sealing ring (6) arranged in a circumferential groove in the edge area (5).

3. The container according to any one of claims 1 or 2, **characterised in that** the socket is arranged between the reception (4) and the stop valve.

4. The container according to claim 3, **characterised in that** the socket is arranged in the area of the outlet opening (9) in such a way that it is accessible via the reception (4).

5. The container according to claim 3, **characterised in that** the socket is configured as an extension (11) at the start of the drain line (8).

6. The container according to any one of claims 1 to 5, **characterised in that** it comprises a throttle valve inserted into the socket.

7. The container according to claim 6, **characterised in that** the throttle valve is configured as a dynamic pressure shutter.

8. The container according to claim 7, **characterised in that** the dynamic pressure shutter is an apertured diaphragm (22) with a continuous channel having a diameter of between 1.5 mm and 3 mm and a length of between 8 mm and 15 mm.

9. The container according to any one of claims 1 to 8, **characterised in that** the stop valve is configured as a ball valve (12).

10. A filter set comprising a container (1) according to any one of claims 1 to 9 as well as at least a first filter cartridge (13) that can be inserted into the reception (4) and is configured as an ion exchanger cartridge, and at least a second filter cartridge (13') that can be inserted into the reception (4) and is configured as a reverse osmosis cartridge.

11. The filter set according to claim 10, **characterised in that** it comprises a throttle valve that is inserted or can be inserted into the drain line (8) of the container (1).

12. The filter set according to claim 10 or 11, **characterised in that** the first filter cartridge (13) and the second filter cartridge (13') respectively have a housing that is permeable for liquid on an underside and an upper side opposite thereof and has a circumferential cartridge wall (14) that is impermeable for liquid, the housing comprising a filter compartment filled with filter material (20), and a return line (17) surrounded by the cartridge wall (14) with a distance and leading from the underside to an outflow opening (19) arranged on the upper side.

13. The filter set according to any one of claims 10 to 12, with a container (1) according to claim 3, **characterised in that** the first filter cartridge (13) and the second filter cartridge (13') respectively have a cartridge bottom (15) provided with openings on their undersides, and a cartridge lid (16) provided with openings on their upper sides.

## Revendications

1. Récipient (1) pour une cartouche filtrante (13, 13'), ayant un fond (2) et une paroi latérale (3) périphérique reliée avec celui, les deux formant un logement (4) ouvert sur un côté supérieur opposé au fond (2) pour la cartouche filtrante (13, 13'), avec une ligne de sortie (8) passant par le fond (2) et reliant une ouverture d'évacuation (9) dans le logement (4) avec une ouverture de drainage (10) sur un côté extérieur du récipient (1), dans laquelle est prévue une embase pour recevoir une vanne d'étranglement, et en outre est disposé un robinet d'arrêt, **caractérisé en ce que** la surface supérieure du fond (2) faisant face au logement (4) comprend une région de bord (5) contiguë à la paroi latérale (3) et une dépression centrale (7) dans laquelle est située l'ouverture d'évacuation (9).

2. Récipient selon la revendication 1, **caractérisé en ce qu'**il présente une bague d'étanchéité (6) qui est disposée dans une rainure périphérique dans la région de bord (5).

3. Récipient selon la revendication 1 ou 2, **caractérisé en ce que** l'embase est disposé entre le logement (4) et le robinet d'arrêt.

4. Récipient selon la revendication 3, **caractérisé en ce que** l'embase est disposée dans la région de l'ouverture d'évacuation (9), de telle manière qu'elle est accessible via le logement (4).

5. Récipient selon la revendication 3, **caractérisé en ce que** l'embase est configurée sous forme d'élargissement (11) au début de la ligne de sortie (8).

6. Récipient selon l'une quelconque des revendications 1 à 5, **caractérisé en ce qu'**il comprend une vanne d'étranglement insérée dans l'embase.

7. Récipient selon la revendication 6, **caractérisé en ce que** la vanne d'étranglement est configurée sous forme d'obturateur de pression dynamique.

8. Récipient selon la revendication 7, **caractérisé en ce que** l'obturateur de pression dynamique est un obturateur à orifice (22) avec un canal continu avec un diamètre entre 1,5 mm et 3 mm et une longueur entre 8 mm et 15 mm.

9. Récipient selon l'une quelconque des revendications 1 à 8, **caractérisé en ce que** le robinet d'arrêt est configuré sous forme de robinet à boule (12).

10. Ensemble de filtre, comportant un récipient (1) selon l'une quelconque des revendications 1 à 9 et au moins une première cartouche filtrante (13) qui peut être insérée dans le logement (4) et est configurée sous forme de cartouche échangeuse d'ions, et au moins une seconde cartouche filtrante (13') qui peut être insérée dans le logement (4) et est configurée sous forme de cartouche d'osmose inverse.

11. Ensemble de filtre selon la revendication 10, **caractérisé en ce qu'**il comprend une vanne d'étranglement qui est insérée ou peut être insérée dans la ligne de sortie (8) du récipient (1).

12. Ensemble de filtre selon la revendication 10 ou 11, **caractérisé en ce que** la première cartouche filtrante (13) et la seconde cartouche filtrante (13') respectivement présentent un boîtier respectivement perméable pour liquides sur un côté inférieur et un côté supérieur opposé et ayant une paroi de cartouche (14) périphérique imperméable aux liquides, le boîtier comprenant un espace de filtrage rempli d'un matériau de filtrage (20) et une ligne de retour (17) entourée par la paroi de cartouche (14) à une certaine distance et s'étendant à partir du côté inférieur jusqu'à une ouverture d'écoulement (19) disposée sur le côté supérieur.

13. Ensemble de filtre selon l'une quelconque des revendications 10 à 12, avec un récipient (1) selon la revendication 3, **caractérisé en ce que** la première cartouche filtrante (13) et la seconde cartouche filtrante (13') respectivement présentent, sur le côté inférieur, un fond de cartouche (15) muni des ouvertures, et sur le côté supérieur, un couvercle de cartouche (16) muni des ouvertures.
